# EUROPÄISCHE PATENTSCHRIFT

(11) **EP 1 164 401 B1**
(45) Veröffentlichungstag und Bekanntmachung des Hinweises auf die Patenterteilung: **09.03.2005**
(21) Anmeldenummer: 01112881.6
(22) Anmeldetag: 01.06.2001
(51) Int. Cl.: G02B 21/00, G02B 6/12, G02F 1/39

(54) **Verschränkte-Photonen-Mikroskop**
Entangled-photon microscope
Microscope à photons dont les états quantiques sont enchevêtrés

(30) Priorität: 29.03.2001 DE 10115486; 17.06.2000 DE 10030013
(43) Veröffentlichungstag der Anmeldung: 19.12.2001
(73) Patentinhaber: Leica Microsystems Heidelberg GmbH, 68165 Mannheim (DE)
(72) Erfinder: Birk, Holger, Dr., 74909 Meckesheim (DE); Storz, Rafael, Dr., 69245 Bammental (DE); Engelhardt, Johann, Dr., 76669 Bad Schönborn (DE)
(74) Vertreter: Reichert, Werner F., Dr.

(56) Entgegenhaltungen:
- WO-A-00/49435
- US-A- 5 796 477
- PETROSYAN D ET AL: "Photon-photon correlations and entanglement in doped photonic crystals" PHYSICAL REVIEW A (ATOMIC, MOLECULAR, AND OPTICAL PHYSICS), AUG. 2001, APS THROUGH AIP, USA, Bd. 64, Nr. 2, Seiten 023810/1-6, XP002177163 ISSN: 1050-2947
- KNIGHT J C ET AL: "ANOMALOUS DISPERSION IN PHOTONIC CRYSTAL FIBER" IEEE PHOTONICS TECHNOLOGY LETTERS, IEEE INC. NEW YORK, US, Bd. 12, Nr. 7, Juli 2000 (2000-07), Seiten 807-809, XP000968675 ISSN: 1041-1135

## Beschreibung

Die Erfindung betrifft ein Verschränkte-Photonen-Mikroskop mit einer Lichtquelle und einem Objektiv.

In der Scanmikroskopie wird eine Probe mit einem Lichtstrahl beleuchtet, um das von der Probe emittierte Reflexions- oder Fluoreszenzlicht zu beobachten. Der Fokus des Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Raum-Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt.

In der Zweiphotonen-Rastermikroskopie werden die Fluoreszenzphotonen detektiert, die auf einen Zweiphotonenanregungsprozess zurückzuführen sind. Ein solcher Anregungsprozess kann dann stattfinden, wenn zufällig zwei Photonen geeigneter Wellenlänge innerhalb eines engen Zeitfensters, nämlich der Lebensdauer des virtuellen Zwischenzustandes, in der Probe zusammentreffen. Die Wahrscheinlichkeit eines solchen quasi gleichzeitigen Zusammentreffens ist daher vom Quadrat der Photonendichte abhängig, so dass in der Praxis hohe Anregungslichtleistungen erzielt werden müssen. Um hohe Lichtleistungen zu erzielen, ist es zweckmäßig, das Anregungslicht zu pulsen. Diese Technik ist weithin bekannt und wird sowohl mit Femtosekundenpulsen (US 5,034,613; Denk, Strickler, Webb), als auch mit Picosekundenpulsen ( DE 44 14 940) praktiziert. Bei den derzeit üblicherweise verwendeten Pulslasem handelt es sich fast ausschließlich um modengekoppelte Titan-Saphir-Laser (Ti:Saphir-Laser) mit Pulsrepetitionsraten von 75 MHz - 100 MHz. Durch die hohen Lichtleistungen kommt es zu unerwünschtem Ausbleichen und zu Schädigungen der Probe.

Es ist in der Mehrphotonenmikroskopie auch üblich, beispielsweise in einer Durchlichtanordnung, das Fluoreszenzlicht kondensorseitig zu detektieren, ohne dass der Detektionslichtstrahl über die Scanspiegel zum Detektor gelangt (Non-descan-Anordnung). Um, wie in der Descan-Anordnung, eine dreidimensionale Auflösung zu erzielen, wäre eine kondensorseitige Detektionsblende nötig. Im Falle der Zwei- oder Mehrphotonenanregung kann jedoch auf eine Detektionsblende verzichtet werden, da die Anregungswahrscheinlichkeit in den Nachbarregionen des Fokus so niedrig ist, dass von dort nahezu kein Fluoreszenzlicht ausgeht. Das zu detektierende Fluoreszenzlicht stammt daher mit großer Wahrscheinlichkeit zum aller größten Teil aus der Fokusregion, was eine weitere Differenzierung von Fluoreszenzphotonen aus dem Fokusbereich von Fluoreszenzphotonen aus den Nachbarbereichen mit einer Detektionsblende überflüssig macht.

In der Patentschrift US 5,796,477 ist ein Verschränkte-Photonen-Mikroskop offenbart, das die Vorteile der Mehrphotonenanregung aufweist, das jedoch extrem hohe Anregungslichtleistungen und die damit verbundenen Nachteile vermeidet. Anstelle von unabhängig voneinander entstandenen Photonen, werden verschränkte Photonen zur Anregung der Probe verwendet.

Zur Erzeugung von verschränkten Photonen ist in der genannten Patentschrift ein nichtlineares optisches Medium vorgeschlagen, das ein Kristall oder eine Oberfläche sein kann, in dem durch spontane parametrische Down-Conversion (spontaneous parametric downconversion) bei Beleuchtung mit einem Pumplichtstrahl zwei Strahlen verschränkter Photonen entstehen. Die beiden Strahlen werden beim Fokussieren in der Probe zusammen geführt, wobei die optische Länge der Strahlengänge genau aufeinander abgeglichen sein muss; was in der Praxis erhebliche Anforderungen an die Justiergenauigkeit und die mechanische Stabilität stellt.

Bei der spontanen parametrischen Down-Conversion oder parametrischen Fluoreszenz werden in einem Zwei-Photonen-Kaskadenübergang quasi gleichzeitig zwei Photonen emittiert. Da diese beiden Photonen eine gemeinsame Entstehungsursache, dem Übergang eines elektronisch angeregten Zustandes in den Grundzustand, haben und der Spin des Gesamtsystems, Atom und Strahlungsfeld, erhalten bleibt, müssen die Polarisationszustände beider Photonen aneinander gekoppelt sein.

Die Photonen befinden sich in einem sog. quantenmechanisch verschränkten Zustand. Die Wahrscheinlichkeit der Anregung eines Fluorophors in der Probe ist bei der Beleuchtung mit verschränkten Photonen linear von der Anregungslichtleistung und nicht, wie bei der bekannten Zweiphotonenanregung, vom Quadrat der Anregungslichtleistung abhängig; denn im Fokus passen bei geeigneten Randbedingungen verschränkte Photonen hinsichtlich Zeit und Ort prinzipiell immer zueinander.

Die Erzeugung von verschränkten Photonen mit Kristallen ist sehr ineffizient. Ferner hat die bekannte Anordnung den Nachteil, dass zwangsläufig zwei oder mehr Strahlen verschränkter Photonen entstehen, die getrennt voneinander geführt in der Probe zur zumindest teilweisen Überlappung gebracht werden müssen.

Der Erfindung liegt die Aufgabe zugrunde ein Verschränkte-Photonen-Mikroskop zu schaffen, das die aufgezeigten Nachteile vermeidet.

Die objektive Aufgabe wird durch ein Verschränkte-Photonen-Mikroskop gelöst, das die Merkmale des kennzeichnenden Teils des Patentanspruchs 1 aufweist.

Die Erfindung hat den Vorteil, dass verschränkte Photonen mit höherer Effizienz, als mit den bekannten Mitteln erzeugt werden. Weiterhin hat die Erfindung den Vorteil, dass die verschränkten Photonen nicht in räumlich getrennten Strahlen geführt werden müssen.

Das Verschränkte-Photonen-Mikroskop beinhaltet ein mikrostrukturiertes optisches Element, das aus einer Vielzahl von mikrooptischen Strukturelementen aufgebaut ist, die zumindest zwei unterschiedliche optische Dichten aufweisen. Die mikrooptischen Strukturelemente sind vorzugsweise Kanülen, Stege, Waben, Röhren oder Hohlräume.

Besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt.

Das mikrostrukturierte optische Element besteht in einer anderen Ausgestaltung aus nebeneinander angeordnetem Glas- oder Kunststoffmaterial und Hohlräumen und ist als Lichtleitfaser ausgestaltet. Elemente dieser Art werden auch als "photonic band gap material" bezeichnet. Bei "Photonic band gap material" handelt es sich um mikrostrukturiertes durchsichtiges Material. Meist durch Zusammenfügen von verschiedenen Dielektrika lässt sich dem resultierenden Kristall eine Bandstruktur für Photonen aufprägen, die an die elektronische Bandstruktur von Halbleitern erinnert.

Die Technik ist auch in Form von Lichtleitfasern realisierbar. Die Fasern werden durch Ausziehen von strukturiert angeordneten Glasröhren oder Glasblöcken hergestellt, so dass eine Struktur entsteht, die nebeneinanderliegend Glas-, bzw. Kunststoffmaterial und Hohlräume aufweist. Den Fasern liegt eine besondere Struktur zugrunde:

In einer speziellen Ausgestaltungsform sind in Faserrichtung kleine Kanülen frei gelassen, die einen Abstand von etwa 2-3 µm und einen Durchmesser von ca. 1-2µm haben und meist mit Luft gefüllt sind, wobei Kanülendurchmesser von 1,9 µm besonders geeignet sind. In der Mitte der Faser liegt meist keine Kanüle vor. Diese Art von Fasern sind auch als "photonic crystal fibres", "holey fibers" oder "microstructured fibers" bekannt.

Es sind auch Ausgestaltungen als sog. "Hollow fiber" bekannt, bei denen sich in der Mitte der Faser eine in der Regel luftgefüllte Röhre befindet, um die herum Kanülen angeordnet sind.

Eine ganz besonders bevorzugte und einfach zu realisierende Ausführungsvariante beinhaltet als mikrostrukturiertes optisches Element eine herkömmliche Lichtleitfaser mit einem Faserkern, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der Faser beträgt in einer bevorzugten Ausgestaltung 150 µm außerhalb des Bereich der Verjüngung und der des Faserkerns in diesem Bereich ca. 8 µm. Im Bereich der Verjüngung ist der Durchmesser der Faser auf ca. 2 µm reduziert. Der Faserkem Durchmesser liegt entsprechend im Nanometerbereich.

Ein besonderer Vorteil des erfindungsgemäßen Verschränkte-Photonen-Mikroskop ist es, dass Photonen unterschiedlicher Wellenlänge zur Wirkung kommen. Hierzu ist es von Vorteil die entsprechenden Wellenlängen mit Filteranordnungen auszuwählen. Licht nicht gewünschter Wellenlängen wird mit Filtern ausgeblendet.

In einer anderen Ausgestaltung sind Mittel zum Abgleich der optischen Weglängen für verschränkte Photonen unterschiedlicher Wellenlängen vorgesehen. Dies ist insbesondere dann von besonderem Interesse, wenn die verschränkten Photonen auf Grund von Dispersion in den optischen Komponenten des Verschränkte-Photonen-Mikroskops unterschiedliche Laufzeiten aufweisen. Als Mittel zum Abgleich sind Driftstrecken oder Prismen- oder Gitteranordnungen verwendbar.

Als Lichtquelle ist vorzugsweise ein Pulslaser zu verwenden; insbesondere sind modengekoppelte Pulslaser besonders geeignet. Aber auch einen kontinuierlichen Lichtstrahl erzeugende Laser oder Lampen sind verwendbar.

In einer Ausführungsvariante sind im Detektionsstrahlengang Filter vorgesehen, die nur das Licht, das auf einen 2-Photonen-Übergang zurück zu führen ist, zu dem Detektor gelangen lässt.

Das Scanmikroskop kann als Konfokalmikroskop ausgestaltet sein.

In der Zeichnung ist der Erfindungsgegenstand schematisch dargestellt und wird anhand der Figuren nachfolgend beschrieben. Dabei zeigen:
- Fig. 1: ein erfindungsgemäßes Verschränkte-Photonen-Mikroskop,
- Fig. 2: ein Verschränkte-Photonen-Mikroskop in Non-Descan-Anordnung,
- Fig. 3: eine Ausgestaltung des mikrostrukturierten optischen Elements,
- Fig. 4: eine weitere Ausgestaltung des mikrostrukturierten optischen Elements und
- Fig. 5: eine weitere Ausgestaltung des mikrostrukturierten optischen Elements.

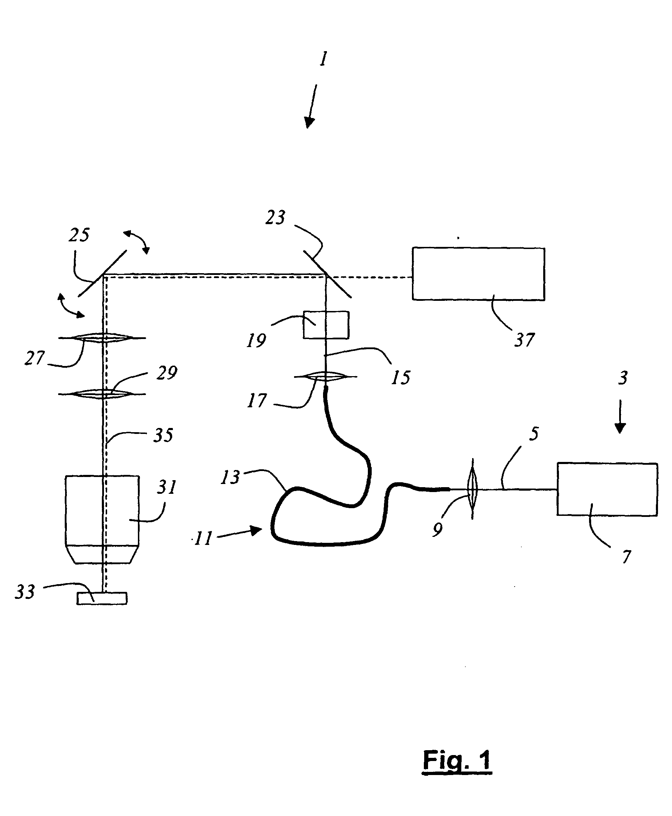

Fig. 1 zeigt ein Verschränkte-Photonen-Mikroskop 1, das eine Lichtquelle 3 zur Erzeugung eines Lichtstrahles 5 einer Wellenlänge von etwa 800 nm beinhaltet. Der Laser ist als modengekoppelter Ti:Saphir-Pulslaser 7 ausgeführt. Der Lichtstrahl 5 wird mit einer Einkoppeloptik 9 in das Ende eines mikrostrukturierten optischen Elements 11 fokussiert, das als Lichtleitfaser aus Photonic-Band-Gap-Material 13 ausgebildet ist. In dem mikrostrukturierten optischen Element 11 werden verschränkte Photonen erzeugt, die sich entlang der Lichtleitfaser aus Photonic-Band-Gap-Material 13 ausbreiten. Zum Kollimieren des aus der Lichtleitfaser aus Photonic-Band-Gap-Material 13 austretenden Strahles verschränkter Photonen 15 ist eine Auskoppeloptik 17 vorgesehen. Der Strahl verschränkter Photonen 15 durchläuft einen dielektrischen Filter 19, der Lichtanteile der ersten Wellenlänge blockiert, so dass gewährleistet ist, dass kein Licht unverschränkter Photonen der Lichtquelle 3 die Probe 33 erreicht. Anschließend gelangt der Strahl verschränkter Photonen 15 über den Hauptstrahlteiler 23 zum Scanspiegel 25, der den Strahl verschränkter Photonen 15 durch die Scanoptik 27, die Tubusoptik 29 und das Objektiv 31 hindurch über bzw. durch die Probe 33 führt. Das von der Probe 33 ausgehende Detektionslicht 35, das in der Zeichnung gestrichelt dargestellt ist, gelangt durch das Objektiv 31, die Tubusoptik 29 und die Scanoptik 27 hindurch zurück zum Scanspiegel 25 und dann zum Hauptstrahlteiler 23, passiert diesen und wird mit dem Detektor 37, der als Photomultiplier ausgeführt ist, detektiert.

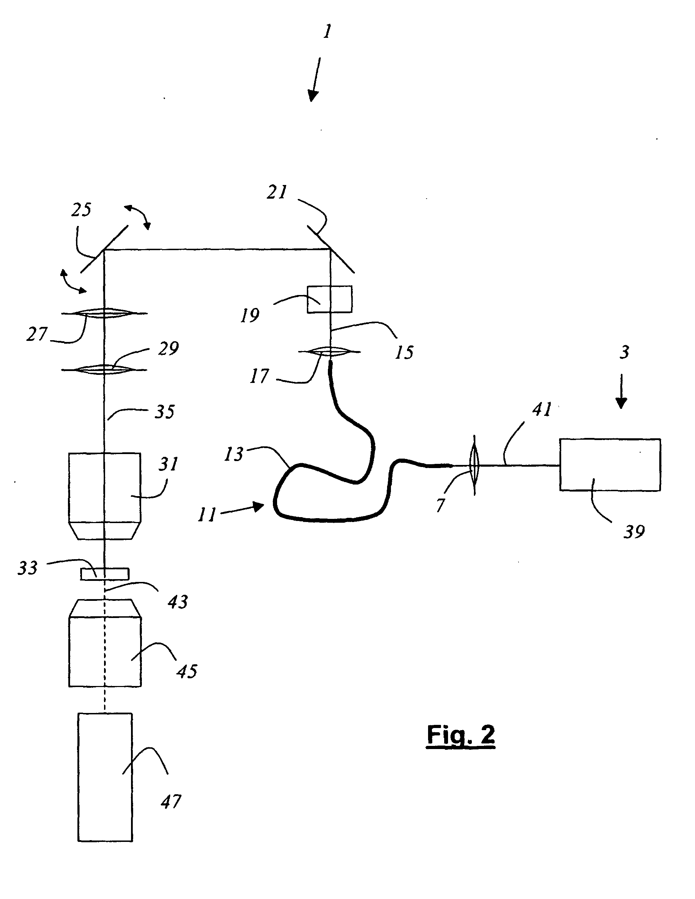

Fig. 2 zeigt ein Verschränkte-Photonen-Mikroskop 1 in Non-Descan-Anordnung. In diesem Ausführungsbeispiel erzeugt eine Lichtquelle 3, die als Nd-YAG-Laser 39 ausgestaltet ist, einen Lichtstrahl 41 einer ersten Wellenlänge von z.B. 1064 nm, der, analog zur Anordnung in Fig. 1, auf das Ende eines mikrostrukturierten optischen Elements 11 fokussiert, das als Lichtleitfaser aus Photonic-Band-Gap-Material 13 ausgebildet ist. Die Beleuchtung und das Abscannen der Probe 33 mit dem Strahl verschränkter Photonen 15 erfolgt analog wie in der bei der in Fig. 1 gezeigten Anordnung, wobei anstelle des Hauptstrahlteilers 23 ein Spiegel 21 eingesetzt ist. Das von der Probe 33 ausgehende Detektionslicht 43, das in der Zeichnung gestrichelt dargestellt ist, gelangt durch einen Kondensor 45, direkt zu einem Detektor 47, der als Avalalanche-Photodiode ausgeführt ist.

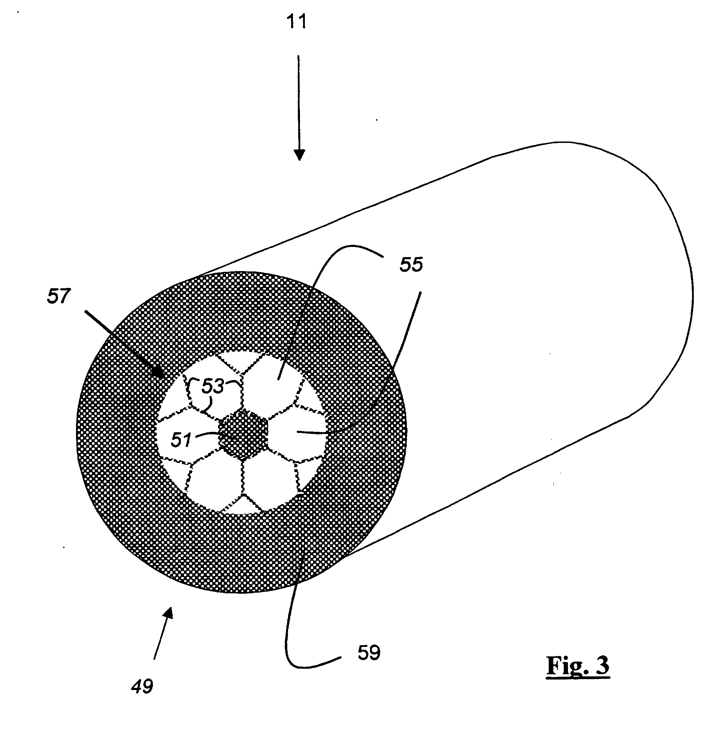

Fig. 3 zeigt eine Ausführungsform des mikrostrukturierten optischen Elements 11 aus Photonic-Band-Gap-Material, das eine besondere wabenförmige Mikrostruktur 49 aufweist. Diese Mikrostruktur ist für die Erzeugung verschränkter Photonen besonders geeignet. Der Durchmesser der inneren Kanüle 51, die aus Glas besteht, beträgt ca. 1,9 µm. Die innere Kanüle 51 ist von Stegen 53 umgeben, die ebenfalls aus Glas bestehen. Die Stege 53 formen wabenförmige Hohlräume 55. Diese mikrooptischen Strukturelemente bilden gemeinsam einen zweiten Bereich 57, der von einem ersten Bereich 59, der als Glasmantel ausgeführt ist, umgeben ist.

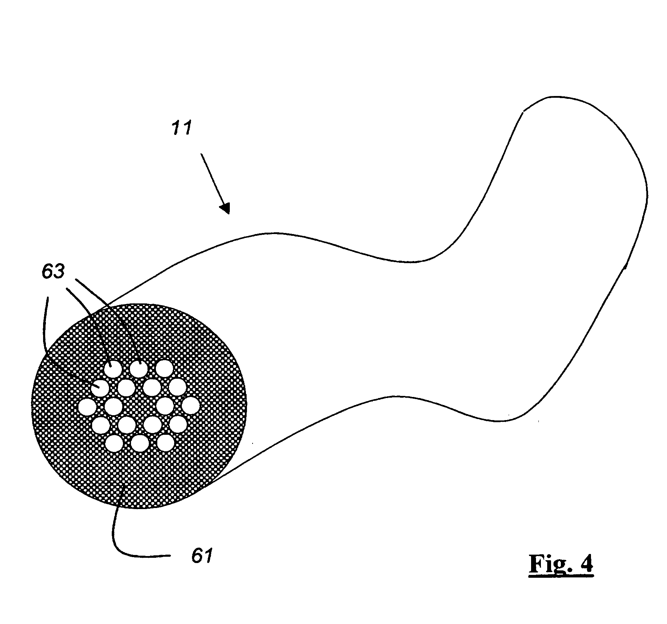

Fig. 4 zeigt eine Ausführungsform des mikrostrukturierten optischen Elements 11, das als biegsame Lichtleitfaser ausgestaltet ist und aus einem Glaskörper 61 besteht, der mehrere hohle Kanülen 63 beinhaltet. Im Zentrum befindet sich bei dieser Ausgestaltungsform keine hohle Kanüle.

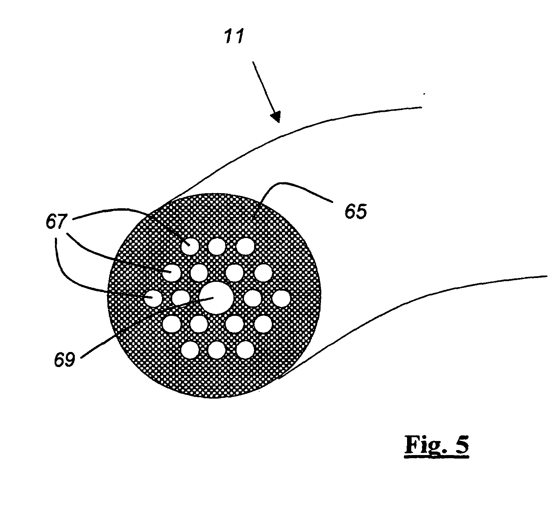

Fig. 5 zeigt eine weitere Ausgestaltungsform des mikrostrukturierten optischen Elements 11, das aus einem Kunststoffkörper 65 besteht, in dem sich hohle Kanülen 67 mit einem Innendurchmesser von 1,9 µm befinden. Im Zentrum des mikrostrukturierten optischen Elements 11 befindet sich eine hohle Kanüle 69, die einen Innendurchmesser von etwa 3 µm aufweist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Verschränkte-Photonen-Mikroskop
- 3: Lichtquelle
- 5: Lichtstrahl
- 7: Ti:Saphir-Pulslaser
- 9: Einkoppeloptik
- 11: mikrostrukturiertes optisches Element
- 13: Lichtleitfaser aus Photonic-Band-Gap-Material
- 15: Strahl verschränkter Photonen
- 16: Mittel zur Unterdrückung
- 17: Auskoppeloptik
- 19: dielektrischer Filter
- 21: Spiegel
- 23: Hauptstrahlteiler
- 25: Scanspiegel
- 27: Scanoptik
- 29: Tubusoptik
- 31: Objektiv
- 33: Probe
- 35: Detektionslicht
- 37: Detektor
- 39: Nd-YAG-Laser
- 41: Lichtstrahl
- 43: Detektionslicht
- 45: Kondensor
- 47: Detektor
- 49: Mikrostruktur
- 51: Kanüle
- 53: Stege
- 55: Hohlräume
- 57: zweiter Bereich
- 59: erster Bereich
- 61: Glaskörper
- 63: hohle Kanülen
- 65: Kunststoffkörper
- 67: hohle Kanülen
- 69: hohle Kanüle

## Patentansprüche

1. Verschränkte-Photonen-Mikroskop (1) mit einer Lichtquelle (3) und einem Objektiv (31), wobei zwischen der Lichtquelle (3) und dem Objektiv (31) ein mikrostrukturiertes optisches Element (11) angeordnet ist, in dem verschränkte Photonen erzeugbar sind,
**dadurch gekennzeichnet, dass** das optische Element (11) mikrostrukturiert ist und aus einer Vielzahl von mikrooptischen Strukturelementen aufgebaut ist, die zumindest zwei unterschiedliche optische Dichten aufweisen, wobei sich die verschränkten Photonen innerhalb und außerhalb des mikrostrukturierten optischen Elements in einem Strahl (15) ausbreiten.

2. Verschränkte-Photonen-Mikroskop (1) nach Anspruch 1, **dadurch gekennzeichnet, dass** das mikrostrukturierte optische Element (11) einen ersten Bereich (59) und einen zweiten Bereich (57) beinhaltet, wobei der erste Bereich (59) eine homogene Struktur aufweist und in dem zweiten Bereich (57) eine Mikrostruktur (49) aus mikrooptischen Strukturelementen gebildet ist.

3. Verschränkte-Photonen-Mikroskop (1) nach einem der Ansprüche 1 oder 2, **dadurch gekennzeichnet, dass** das mikrostrukturierte optische Element (11) aus nebeneinander angeordnetem Glas- oder Kunststoffmaterial und Hohlräumen (55) besteht.

4. Verschränkte-Photonen-Mikroskop (1) nach einem der Ansprüche 1 oder 2, **dadurch gekennzeichnet, dass** die mikrooptischen Strukturelemente Kanülen (51, 63, 67, 69), Stege (53), Waben, Röhren oder Hohlräume (55) sind.

5. Verschränkte-Photonen-Mikroskop (1) nach Anspruch 1, **dadurch gekennzeichnet, dass** das mikrostrukturierte optische Element (11) aus Photonic-Band-Gap-Material besteht.

6. Verschränkte-Photonen-Mikroskop (1) nach einem der Ansprüche 1 bis 5, **dadurch gekennzeichnet, dass** das mikrostrukturierte optische Element (11) als Lichtleitfaser ausgestaltet ist.

7. Verschränkte Photonen-Mikroskop (1) nach einem der Ansprüche 1 bis 5, **dadurch gekennzeichnet, dass** das mikrostrukturierte optische Element (11) als Lichtleitfaser ausgestaltet ist, die eine Verjüngung aufweist.

8. Verschränkte Photonen-Mikroskop (1) nach einem der Ansprüche 1 bis 5, **dadurch gekennzeichnet dass** Filter zur Auswahl von Photonen verschiedenen Wellenlängen vorgesehen sind.

9. Verschränkte-Photonen-Mikroskop (1) nach einem der vorherigen Ansprüche, **dadurch gekennzeichnet, dass** das Verschränkte-Photonen-Mikroskop (1) ein Konfokalmikroskop ist.

## Claims

1. Entangled-photon microscope (1) having a light source (3) and an objective (31), a microstructured optical element (11), in which entangled photons can be produced, being arranged between the light source (3) and the objective (31) **characterized in that** the optical element (11) is microstructured and is constructed from a plurality of micro-optical structure elements which have at least two different optical densities, the entangled photons propagating in a beam (15) inside and outside the microstructured optical element.

2. Entangled-photon microscope (1) according to Claim 1, **characterized in that** the microstructured optical element (11) contains a first region (59) and a second region (57), the first region (59) having a homogeneous structure and a microstructure (49) comprising micro-optical structure elements being formed in the second region (57).

3. Entangled-photon microscope (1) according to one of Claims 1 or 2, **characterized in that** the microstructured optical element (11) consists of adjacent glass or plastic material and cavities (55).

4. Entangled-photon microscope (1) according to one of Claims 1 or 2, **characterized in that** the micro-optical structure elements are cannulas (51, 63, 67, 69), webs (53), honeycombs, tubes or cavities (55).

5. Entangled-photon microscope (1) according to Claim 1, **characterized in that** the microstructured optical element (11) consists of photonic band gap material.

6. Entangled-photon microscope (1) according to one of Claims 1 to 5, **characterized in that** the microstructured optical element (11) is configured as an optical fibre.

7. Entangled-photon microscope (1) according to one of Claims 1 to 5, **characterized in that** the microstructured optical element (11) is configured as an optical fibre which has a taper.

8. Entangled-photon microscope (1) according to one of Claims 1 to 5, **characterized in that** filters for selecting photons of different wavelengths are provided.

9. Entangled-photon microscope (1) according to one of the preceding claims, **characterized in that** the entangled-photon microscope (1) is a confocal microscope.

## Revendications

1. Microscope à photons intriqués (1) avec une source lumineuse (3) et un objectif (31), dans lequel entre la source lumineuse (3) et l'objectif (31) est disposé un élément optique microstructuré (11), dans lequel on peut produire des photons intriqués, **caractérisé en ce que** l'élément optique (11) est microstructuré et il est constitué d'une pluralité d'éléments structuraux micro-optiques qui présentent au moins deux densités optiques différentes, les photons intriqués se propageant à l'intérieur et à l'extérieur de l'élément optique microstructuré, dans un faisceau (15).

2. Microscope à photons intriqués (1) selon la revendication 1, **caractérisé en ce que** l'élément optique microstructuré (11) contient une première région (59) et une deuxième région (57), la première région (59) présentant une structure homogène, et une microstructure (49) constituée d'éléments structuraux micro-optiques étant formée dans la deuxième région (57).

3. Microscope à photons intriqués (1) selon la revendication 1 ou 2, **caractérisé en ce que** l'élément optique microstructuré (11) est constitué de matière de verre ou de matière plastique, disposées de façon adjacente, et de cavités (55).

4. Microscope à photons intriqués (1) selon la revendication 1 ou 2, **caractérisé en ce que** les éléments structuraux micro-optiques sont des canules (51, 63, 67, 69), des entretoises (53), des alvéoles, des tubes ou des cavités (55).

5. Microscope à photons intriqués (1) selon la revendication 1 **caractérisé en ce que** l'élément optique microstructuré (11) est constitué d'un matériau à bande interdite photonique.

6. Microscope à photons intriqués (1) selon l'une quelconque des revendications 1 à 5, **caractérisé en ce que** l'élément optique microstructuré (11) est formé en tant que fibre de guide de lumière.

7. Microscope à photons intriqués (1) selon l'une quelconque des revendications 1 à 5, **caractérisé en ce que** l'élément optique microstructuré (11) est formé en tant que fibre de guide de lumière qui présente un rétrécissement.

8. Microscope à photons intriqués (1) selon l'une quelconque des revendications 1 à 5, **caractérisé en ce que** des filtres sont prévus pour sélectionner des photons de longueurs d'onde différentes.

9. Microscope à photons intriqués (1) selon l'une quelconque des revendications précédentes, **caractérisé en ce que** le microscope à photons intriqués (1) est un microscope confocal.
